# EUROPÄISCHE PATENTSCHRIFT

(11) **EP 3 173 286 B1**
(45) Veröffentlichungstag und Bekanntmachung des Hinweises auf die Patenterteilung: **26.09.2018**
(21) Anmeldenummer: 16199147.6
(22) Anmeldetag: 16.11.2016
(51) Int. Cl.: B60P 1/26

(54) **TRANSPORTFAHRZEUG FÜR STÜCKGUT**
TRANSPORT VEHICLE FOR PIECE GOODS
VÉHICULE DE TRANSPORT POUR MATÉRIAUX EN VRAC

(30) Priorität: 18.11.2015 DE 202015106266 U
(43) Veröffentlichungstag der Anmeldung: 31.05.2017
(73) Patentinhaber: Fliegl Agrartechnik GmbH, 84453 Mühldorf am Inn (DE)
(72) Erfinder: FLIEGL, Josef, sen., 84556 Kastl (DE)
(74) Vertreter: Hofstetter, Schurack & Partner

(56) Entgegenhaltungen:
- DE-A1- 1 630 865
- DE-A1- 2 538 079
- DE-A1- 2 901 597
- DE-A1- 4 005 429
- DE-A1- 4 223 951

## Beschreibung

Die Erfindung betrifft ein Transportfahrzeug für Stückgut, insbesondere für Ballen, der im Oberbegriff des Anspruchs 1 angegebenen Art.

In der Landwirtschaftsindustrie ist es an sich bekannt, als Ballenwagen bezeichnete Transportfahrzeuge zum Transportieren von Stückgut in Form von Heu- oder Strohballen zu verwenden. Die DE 40 05 429 A1 zeigt beispielsweise ein derartiges Transportfahrzeug für Stückgut, insbesondere für Ballen, welches eine Ladeplattform aufweist, an welcher seitlich eine linke Seitenwand und eine rechte Seitenwand angeordnet sind. Darüber hinaus sind an der Ladeplattform auch noch vorderseitig und rückseitig jeweilige Stirnwände zur Begrenzung der Ladeplattform in Längsrichtung vorgesehen. Auf den Seiten- und Stirnwänden ist eine als Dürrfutteraufbau bezeichnete, klappbare Gitterstruktur angeordnet. Je nachdem, wie hoch die Ladeplattform mit Ballen, beispielsweise Strohballen, beladen werden soll, kann diese als Dürrfutteraufbau bezeichnete Gitterstruktur auf und ab verschwenkt werden, um eine bedarfsgerechte Ladungssicherung erzielen zu können.

Die Beladung des Transportfahrzeugs mit Stückgut, insbesondere mit Ballen, kann sich dabei relativ schwierig gestalten. Darüber hinaus kann auch eine Schwierigkeit darin bestehen, eine zuverlässige Ladungssicherung bei dem Transportfahrzeug vorzunehmen, sobald dieses mit Stückgut beladen worden ist.

Die DE 29 01 597 A1 zeigt einen klappbaren Aufbau, der auf einer Seitenwand eines landwirtschaftlichen Erntewagens angebracht ist. Der Aufbau besteht aus einem vorderen Gatter und Rohrbügeln, welche über jeweilige Lagerwinkel an mehreren übereinander angeordneten Längsschienen angebracht sind. Das Gatter und die Rohrbügel sind um jeweilige Drehpunkte verschwenkbar, die an jeweiligen Lagerböcken vorgesehen sind. Die Lagerböcke sind an einer Oberseite der Seitenwand des Erntewagens angeordnet.

Es ist daher die Aufgabe der vorliegenden Erfindung, ein Transportfahrzeug der eingangs genannten Art bereitzustellen, welches sich auf besonders bequeme Weise mit Stückgut beladen lässt und bei welchem auf besonders einfache Weise eine Ladungssicherung erzielt werden kann.

Diese Aufgabe wird durch ein Transportfahrzeug für Stückgut, insbesondere für Ballen, mit den Merkmalen des Anspruchs 1 gelöst. Vorteilhafte Ausgestaltungen mit zweckmäßigen und nicht trivialen Weiterbildungen der Erfindung sind in den abhängigen Ansprüchen angegeben.

Das erfindungsgemäße Transportfahrzeug für Stückgut, insbesondere für Ballen, umfasst eine Ladeplattform, an welcher seitlich eine linke Seitenwand und eine rechte Seitenwand angeordnet sind. Das erfindungsgemäße Transportfahrzeug zeichnet sich dadurch aus, dass zumindest eine der Seitenwände vollständig in Form von einer Gitterstruktur ausgebildet ist, welche mehrere Horizontalstreben aufweist, die gelenkig an wenigstens zwei Vertikalstreben befestigt sind, deren untere Längsenden um jeweilige in Fahrzeugquerrichtung verlaufende Schwenkachsen verschwenkbar an der Ladeplattform gelagert sind, so dass die Gitterstruktur zwischen einer aufgeklappten Ladungssicherungsposition, in welcher die Vertikalstreben in Hochrichtung des Transportfahrzeugen verlaufen, und einer abgeklappten Beladungsposition, in welcher die Horizontalstreben aneinander anliegen, verschwenkbar ist.

Bei dem erfindungsgemäßen Transportfahrzeug handelt es sich mit anderen Worten also um einen Ballenwagen, bei dem zumindest eine der Seitenwände in Form der besagten Gitterstruktur ausgebildet und zwischen der aufgeklappten Ladungssicherungsposition und der abgeklappten Beladungsposition hin und her verschwenkbar ist.

Vorzugsweise sind beide Seitenwände des Transportfahrzeugs in Form der Gitterstruktur ausgebildet. Vorzugsweise ist also der gesamte seitliche Aufbau des Transportfahrzeugs zwischen der aufgeklappten Ladungssicherungsposition und der abgeklappten Beladungsposition hin und her verschwenkbar. Die Horizontalstreben sind dabei derart an den Vertikalstreben gelagert, dass die Horizontalstreben einen Drehfreiheitsgrad um jeweilige in Fahrzeugquerrichtung verlaufende Drehachsen aufweisen. Darüber hinaus umfasst das erfindungsgemäße Transportfahrzeug vorzugsweise eine Verriegelungsvorrichtung zum Arretieren der Gitterstruktur bzw. der Gitterstrukturen in einer jeweils gewünschten Position. Ferner kann das Transportfahrzeug auch eine Hubeinrichtung zum bequemen Auf- und Abklappen der Gitterstruktur bzw. der Gitterstrukturen aufweisen. Bei der Hubeinrichtung kann es sich um einen Hydraulikzylinder handeln, mittels welchem die Gitterstruktur auf und ab verschwenkbar ist.

Dadurch, dass zumindest eine der Seitenwände vollständig in Form der besagten Gitterstruktur ausgebildet ist, kann das Transportfahrzeug besonders einfach beladen werden, indem die als Gitterstruktur ausgebildete Seitenwand einfach in die abgeklappte Beladungsposition verbracht wird. Danach kann das Transportfahrzeug auf besonders bequeme Weise von der Seite mit Stückgut, beispielsweise mit Heuballen oder dergleichen, beladen werden. Sobald die Beladung des Transportfahrzeugs abgeschlossen ist, kann die als Gitterstruktur ausgebildete Seitenwand von der abgeklappten Beladungsposition in die aufgeklappte Ladungssicherungsposition hochgeklappt werden. In der Ladungssicherungsposition kann auf zuverlässige Weise sichergestellt werden, dass das aufgeladene Stückgut nicht seitlich von dem Transportfahrzeug herunterfällt.

Um eine besonders einfache Beladung des Transportfahrzeugs ermöglichen zu können, ist es vorzugsweise vorgesehen, dass die oberste der Horizontalstreben in der abgeklappten Beladungsposition in Fahrzeughochrichtung bündig mit einer Ladeplattformoberseite abschließt oder unterhalb von der Ladeplattformoberseite angeordnet ist. In der abgeklappten Beladungsposition ist also keine der Horizontalstreben in Fahrzeugquerrichtung im Weg, so dass das Transportfahrzeug auf ganz einfache Weise von der Seite mit Stückgut beladen werden kann. Vorzugsweise sind die Horizontalstreben dabei derart an den Vertikalstreben befestigt, dass in der abgeklappten Beladungsposition auch die Vertikalstreben entweder bündig mit der Ladeplattformoberseite abschließen oder sogar unterhalb von der Ladeplattformoberseite angeordnet sind. Die Ladeplattform des Transportfahrzeugs kann dadurch auf ganz einfache Weise von der Seite her beladen werden, da keine störenden Strukturen im Weg sind.

Eine weitere vorteilhafte Ausführungsform der Erfindung sieht vor, dass das Transportfahrzeug eine Verstelleinrichtung aufweist, mittels welcher die Gitterstruktur in Fahrzeugquerrichtung relativ zur Ladeplattform bewegbar ist. Die zumindest eine als Gitterstruktur ausgebildete Seitenwand kann also auf die Ladeplattform zu und von dieser weg bewegt werden. Dadurch ist es auf einfache Weise möglich, auf der Ladeplattform angeordnetes Stückgut, beispielsweise Heuballen oder dergleichen, zwischen den beiden Seitenwänden einzuklemmen, wodurch eine besonders zuverlässige Ladungssicherung erzielt werden kann.

Gemäß einer weiteren vorteilhaften Ausführungsform der Erfindung ist es vorgesehen, dass die Verstelleinrichtung eine Zwangsführung aufweist, mittels welcher die Gitterstruktur beim Aufklappen in die Ladungssicherungsposition in Fahrzeugquerrichtung auf die Ladeplattform zu und beim Abklappen in die Beladungsposition von der Ladeplattform weg bewegt wird. Die Verschwenkbewegung der Gitterstruktur ist mit anderen Worten also vorzugsweise zwangsgekoppelt an eine Verschiebung der Gitterstruktur in Fahrzeugquerrichtung, und zwar derart, dass die Gitterstruktur in der abgeklappten Beladungsposition in Fahrzeugquerrichtung weiter von der Ladeplattform entfernt angeordnet ist als in der aufgeklappten Ladungssicherungsposition. Wird also die Gitterstruktur nach dem Beladen des Transportfahrzeugs von der abgeklappten Beladungsposition in die aufgeklappte Ladungssicherungsposition verbracht, so kann auf der Ladeplattform angeordnetes Stückgut automatisch in Fahrzeugquerrichtung zwischen den beiden Seitenwänden eingeklemmt werden, um eine zuverlässige Ladungssicherung zu erzielen.

Eine weitere vorteilhafte Ausführungsform der Erfindung sieht vor, dass die Zwangsführung jeweilige sich in Fahrzeugquerrichtung von einem außenseitigen Endbereich zu einem innenseitigen Endbereich erstreckende Kulissen aufweist, mittels welchen jeweilige an den Längsenden der Vertikalstreben angeordnete Führungselemente zwangsgeführt sind, die in der aufgeklappten Ladungssicherungsposition am jeweils innenseitigen Endbereich und in der abgeklappten Beladungsposition am jeweils außenseitigen Endbereich der Kulissen angeordnet sind. Mit anderen Worten weist das Transportfahrzeug also für die zumindest eine Gitterstruktur eine Kulissenführung auf, mittels welcher die Bewegungskopplung der Gitterstruktur hinsichtlich der Bewegung in Fahrzeugquerrichtung und dem Auf- bzw. Abschwenken bewerkstelligt wird. Dadurch kann auf besonders einfache und zuverlässige Weise die Bewegung der Gitterstruktur in Fahrzeugquerrichtung zur Ladungssicherung erzielt werden. Insbesondere muss ein Benutzer des Transportfahrzeugs nicht aktiv noch die zumindest eine als Gitterstruktur ausgebildete Seitenwand in Fahrzeugquerrichtung verschieben, denn dies geschieht automatisch beim Auf- und Abklappen der als Gitterstruktur ausgebildeten Seitenwand.

In weiterer vorteilhafter Ausgestaltung der Erfindung ist es vorgesehen, dass die Verstelleinrichtung einen hydraulischen Verstellmechanismus aufweist, mittels welchem die Gitterstruktur in Fahrzeugquerrichtung relativ zur Ladeplattform bewegbar ist. Unter Verwendung des hydraulischen Verstellmechanismus kann ein Benutzer die auf dem Transportfahrzeug aufgenommene Ladung auf besonders einfache Weise manuell sichern, indem er durch Betätigung des hydraulischen Verstellmechanismus bewirkt, dass die auf dem Transportfahrzeug aufgenommene Ladung zwischen den beiden Seitenwänden eingeklemmt wird. Der hydraulische Verstellmechanismus kann dabei auch in Kombination mit der kulissengeführten Zwangsverschiebung in Fahrzeugquerrichtung der Gitterstruktur erfolgen. Einerseits wird die Gitterstruktur also in bereits erläuterter Weise beim Aufschwenken in die Ladungssicherungsposition auf die Ladeplattform zu bewegt, wodurch schon eine gewisse Einquetschung des aufgenommenen Stückguts in Fahrzeugquerrichtung erfolgen kann. Sollte dies gegebenenfalls nicht ausreichend sein, so kann auch zusätzlich der hydraulische Verstellmechanismus betätigt werden, um die zumindest eine als Gitterstruktur ausgebildete Seitenwand noch stärker auf die Ladeplattform zu in Fahrzeugquerrichtung zu verschieben.

Eine weitere vorteilhafte Ausführungsform der Erfindung sieht vor, dass die Verstelleinrichtung wenigstens ein Teleskoprohr aufweist, mittels welchem die Gitterstruktur in Fahrzeugquerrichtung relativ zur Ladeplattform bewegbar ist, wobei die Verstelleinrichtung zumindest ein Arretiermittel, insbesondere einen Steckbolzen, zum Arretieren des Teleskoprohrs umfasst. Auch mittels des Teleskoprohrs kann auf einfache Weise eine Ladungssicherung erzielt werden, da mit Hilfe des Teleskoprohrs und des Arretiermittels die zumindest eine als Gitterstruktur ausgebildete Seitenwand in Fahrzeugquerrichtung relativ zur Ladeplattform bewegt werden kann. Die Lösung mit dem Teleskoprohr und dem Arretiermittel kann dabei sowohl mit dem hydraulischen Verstellmechanismus als auch mit dem kulissengeführten Verstellmechanismus kombiniert werden, wobei auch alle drei Lösungen miteinander kombiniert werden können. Beispielsweise kann das Teleskoprohr gemeinsam mit dem Arretiermittel dazu verwendet werden, eine bestimmte Lage der Gitterstruktur in Fahrzeugquerrichtung festzulegen. In Kombination mit dem hydraulischen Verstellmechanismus und der Kulissenführung kann dann zusätzlich noch eine stärkere Verstellung der Gitterstruktur in Fahrzeugquerrichtung zur Ladungssicherung erfolgen.

Gemäß einer weiteren vorteilhaften Ausführungsform der Erfindung ist es vorgesehen, dass die Ladeplattform einen auf einem Fahrgestell des Transportfahrzeugs befestigten vorderen Ladeplattformteil, an welchem die unteren Längsenden der Vertikalstreben gelagert sind, und einen in Fahrzeuglängsrichtung relativ zum ersten Ladeplattformteil ausziehbaren hinteren Ladeplattformteil umfasst. Vorzugsweise ist dabei am vorderen Ladeplattformteil eine vordere Stirnwand und am hinteren Ladeplattformteil eine hintere Stirnwand angeordnet. Der hintere Ladeplattformteil bildet eine Art ausziehbare Brücke, mittels welcher bei Bedarf die Länge der Ladefläche des Transportfahrzeugs vergrößert und verkleinert werden kann. Darüber hinaus bringt der ausziehbare hintere Ladeplattformteil noch den Vorteil mit sich, dass bei einer Fahrt mit dem Transportfahrzeug auf öffentlichen Verkehrswegen durch Einfahren des hinteren Ladeplattformteils sichergestellt werden kann, dass eine gesetzlich vorgegebene Gesamtlänge des Transportfahrzeugs, gegebenenfalls in Kombination mit einem Zugfahrzeug, nicht überschritten wird.

Eine weitere vorteilhafte Ausführungsform der Erfindung sieht vor, dass die Gitterstruktur mehrere Verlängerungsstreben aufweist, welche zur Verlängerung der Gitterstruktur in Fahrzeuglängsrichtung an den Horizontalstreben anordnenbar sind. Insbesondere in Kombination mit dem ausziehbaren hinteren Ladeplattformteil ist dies von Vorteil, da durch Anbringen bzw. entsprechendes Einstellen der Verlängerungsstreben die Länge der Gitterstruktur in Fahrzeuglängsrichtung entsprechend zur Positionierung des hinteren Ladeplattformteils angepasst werden kann. Wird also der hintere Ladeplattformteil besonders weit ausgezogen, so können entsprechende Verlängerungsstreben angebracht bzw. derart positioniert werden, dass eine Ladungssicherung entlang der gesamten Ladeplattform sichergestellt werden kann.

Schließlich ist es gemäß einer weiteren vorteilhaften Ausführungsform der Erfindung vorgesehen, dass die Verlängerungsstreben relativ zu den Horizontalstreben längsverschiebbar an diesen anordnenbar sind. Beispielsweise können die Verlängerungsstreben teleskopartig ausgebildet sein, so dass diese je nach Bedarf aus den Horizontalstreben herausgezogen und wiederum in diese hineinbewegt werden können. Ferner können beispielsweise noch Arretiermittel in Form von Bolzen oder dergleichen vorgesehen sein, mittels welchen die Positionierung der Verlängerungsstreben relativ zu den Horizontalstreben festlegbar ist. Dadurch kann auf besonders einfache Weise sichergestellt werden, dass eine Ladungssicherung entlang der gesamten Länge der Ladeplattform jederzeit sichergestellt werden kann, indem die Verlängerungsstreben gerade entsprechend der Länge der Ladeplattform positioniert werden können.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten Merkmale und Merkmalskombinationen sind dabei nicht nur in der angegebenen Kombination, sondern auch in Alleinstellung oder in anderen Kombinationen verwendbar, ohne den Rahmen der Erfindung zu verlassen.

Die Zeichnung zeigt in:
- Fig. 1: eine Perspektivansicht eines Transportfahrzeugs, auf dessen Ladeplatt-form mehrere zylinderförmige und quaderförmige Heuballen angeordnet sind, wobei die Ladeplattform seitlich von zwei gitterförmig ausgebildeten Seitenwänden und in Fahrzeuglängsrichtung von zwei gitterförmigen Stirnwänden begrenzt wird;
- Fig. 2: eine Seitenansicht des mit den Heuballen beladenen Transportfahrzeugs;
- Fig. 3: eine weitere Seitenansicht des Transportfahrzeugs, wobei die beiden Seitenwände in einer abgeklappten Position dargestellt sind;
- Fig. 4: eine Detailansicht von einer der beiden abgeklappten Seitenwände;
- Fig. 5: eine perspektivische Detailansicht des Transportfahrzeugs, wobei eine der beiden Seitenwände sowohl einmal in der abgeklappten als auch in der aufgestellten Position dargestellt ist;
- Fig. 6: eine Draufsicht auf die Unterseite des Transportfahrzeugs, wobei die Seitenwände in ihrer abgeklappten Position dargestellt sind, in welcher diese in Fahrzeugquerrichtung von der Ladeplattform beabstandet sind, wobei in einer Detailansicht eine Kulisse dargestellt ist, welche zur seitlichen Verschiebung von einer der Seitenwände dient;
- Fig. 7: eine weitere Draufsicht auf die Unterseite des Transportfahrzeugs, wobei die Seitenwände in der aufgeklappten Position angeordnet sind, in welcher die Seitenwände in Fahrzeugquerrichtung an der Ladeplattform anliegen, wobei erneut eine der Kulissen, welche zur seitlichen Verschiebung von einer der Seitenwände dient, in einer Detailansicht gezeigt ist; und in
- Fig. 8: eine perspektivische Detailansicht des Transportfahrzeugs, wobei an einer der beiden gitterförmig ausgebildeten Seitenwände eine Netzstruktur angebracht ist.

In den Figuren werden gleiche oder funktionsgleiche Elemente mit gleichen Bezugszeichen versehen.

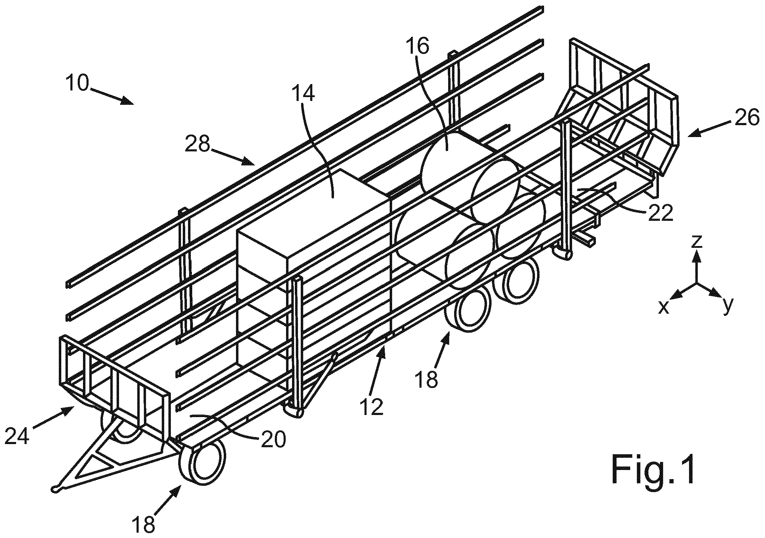

Ein Transportfahrzeug 10 ist in einer Perspektivansicht in Fig. 1 gezeigt. Bei dem Transportfahrzeug 10 handelt es sich um einen Ballenwagen, auf dessen Ladeplattform 12 mehrere quaderförmige Heuballen 14 und mehrere zylinderförmige Heuballen 16 angeordnet sind. Die Ladeplattform 12 weist dabei einen auf einem Fahrgestell 18 des Transportfahrzeugs 10 befestigten vorderen Ladeplattformteil 20 und einen in Fahrzeuglängsrichtung x relativ zum vorderen Ladeplattformteil 20 ausziehbaren hinteren Ladeplattformteil 22 auf. An dem vorderen Ladeplattformteil 20 ist eine vordere Stirnwand 24 und an dem hinteren, ausziehbaren Ladeplattformteil 22 ist eine hintere Stirnwand 26 zur Ladungssicherung angeordnet. Die Ladeplattform 12 wird zudem von zwei in Form von Gitterstrukturen aufgebauten Seitenwänden 28 seitlich begrenzt.

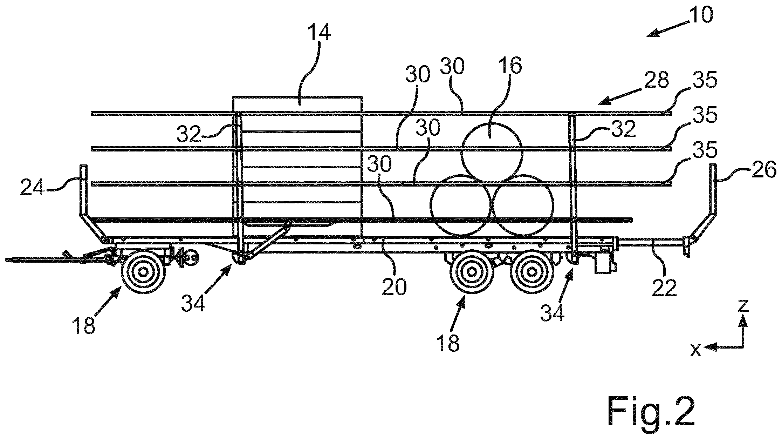

In Fig. 2 ist das Transportfahrzeug 10 in einer Seitenansicht gezeigt. Hier ist nochmals gut die Gitterstruktur von einer der beiden Seitenwände 28 zu erkennen. Die Seitenwände 28 sind also vollständig in Form jeweiliger Gitterstrukturen ausgebildet, welche mehrere Horizontalstreben 30 aufweisen, die jeweils gelenkig an zwei Vertikalstreben 32 befestigt sind. Jeweilige untere Längsenden 34 der Vertikalstreben 32 sind dabei um jeweilige nicht näher bezeichnete, in Fahrzeugquerrichtung y verlaufende Schwenkachsen verschwenkbar an dem vorderen Ladeplattformteil 20 gelagert. Die vollständig in von Form der Gitterstrukturen aufgebauten Seitenwände 28 können dadurch zwischen einer hier gezeigten, aufgeklappten Ladungssicherungsposition, in welcher die Vertikalstreben 32 in Hochrichtung z des Transportfahrzeugs 10 verlaufen, und einer abgeklappten Beladungsposition, in welcher die Horizontalstreben 30 aneinander anliegen, verschwenkt werden.

Die in Form der Gitterstrukturen ausgebildeten Seitenwände 28 weisen zudem mehrere Verlängerungsstreben 35 auf, welche zur Verlängerung der Seitenwände 28 in Fahrzeuglängsrichtung x an den Horizontalstreben 30 angeordnet sind. Die Länge der Seitenwände 28 kann dadurch an die Positionierung des ausziehbaren hinteren Ladeplattformteils 22 angepasst werden. Beispielsweise können die Verlängerungsstreben 35 relativ zu den Horizontalstreben 30 längsverschiebbar an diesen angeordnet sein.

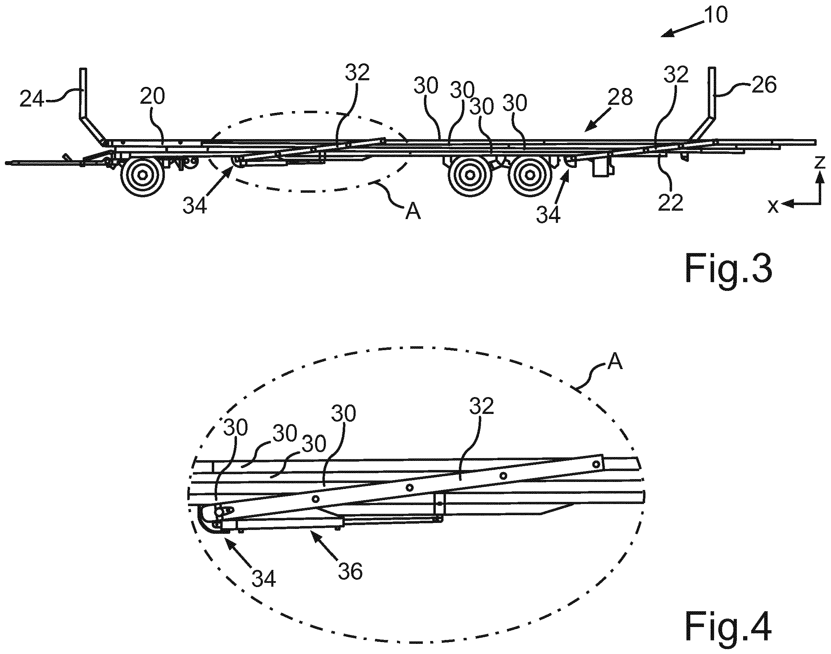

In Fig. 3 ist das Transportfahrzeug 10 in einer weiteren Seitenansicht gezeigt, wobei die beiden Seitenwände 28 in ihrer abgeklappten Beladungsposition gezeigt sind. Ein Ausschnitt A des Transportfahrzeugs 10 ist dabei gekennzeichnet.

In Fig. 4 ist der Ausschnitt A in einer vergrößerten Detailansicht gezeigt. In der vorliegenden Darstellung ist gut zu erkennen, dass die Horizontalstreben 32 in Hochrichtung z jeweils aneinander anliegen, wenn die Seitenwände 28 in ihre abgeklappte Beladungsposition verbracht worden sind. Zur Verstellung der Seitenwände 28 sind an dem Transportfahrzeug 10 je Seitenwand 28 jeweilige hydraulische Hubzylinder 36 vorgesehen, durch deren Betätigung die Seitenwände 28 auf- und abgeschwenkt werden können. Die Seitenwände 28 sind vorzugsweise derart an der Ladeplattform 12 befestigt und angeordnet, dass die oberste der Horizontalstreben 30 in der abgeklappten Beladungsposition in Fahrzeughochrichtung z entweder bündig mit einer Ladeplattformoberseite abschließt oder sogar unterhalb von der Ladeplattformoberseite angeordnet ist. Dadurch kann das Transportfahrzeug 10 auf besonders einfache Weise von der Seite beladen werden, wenn zumindest eine der Seitenwände 28 in der abgeklappten Beladungsposition angeordnet ist.

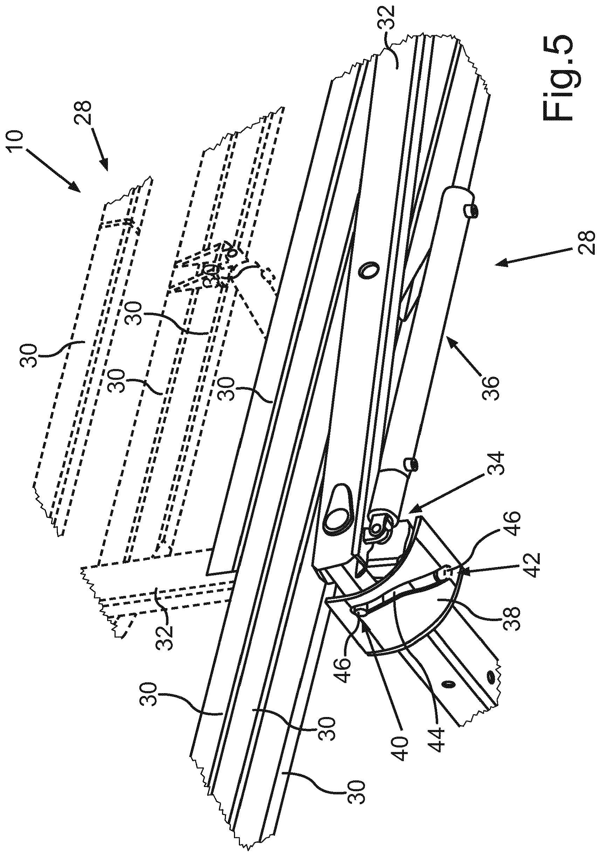

In Fig. 5 ist ein Ausschnitt des Transportfahrzeugs 10 in einer perspektivischen Detailansicht gezeigt, wobei eine der beiden Seitenwände 28 einmal in der abgeklappten Beladungsposition und mit gestrichelten Linien in der aufgeklappten Ladungssicherungsposition dargestellt ist. Das Transportfahrzeug 10 weist eine nicht näher bezeichnete Verstellvorrichtung auf, mittels welcher die als Gitterstrukturen ausgebildeten Seitenwände 28 in Fahrzeugquerrichtung y relativ zur Ladeplattform 12 bewegbar sind. Die Verstelleinrichtung weist eine Zwangsführung 38 auf, mittels welcher die Seitenwände 28 beim Aufklappen in die Ladungssicherungsposition in Fahrzeugquerrichtung y auf die Ladeplattform 12 zu und beim Abklappen in die Beladungsposition von der Ladeplattform 12 weg bewegt werden.

Im vorliegend gezeigten Ausführungsbeispiel weisen die Zwangsführungen 38 jeweilige sich in Fahrzeugquerrichtung y von einem außenseitigen Endbereich 40 zu einem innenseitigen Endbereich 42 erstreckende Kulissen 44 auf, mittels welchen jeweilige an den Längsenden 34 der Vertikalstreben 32 angeordnete Führungselemente 46 zwangsgeführt sind, die in der aufgeklappten Ladungssicherungsposition am jeweils innenseitigen Endbereich 42 und in der abgeklappten Beladungsposition am jeweils außenseitigen Endbereich 40 der Kulissen 44 angeordnet sind.

Werden also die Seitenwände 28 nach unten in die Beladungsposition abgeklappt, so wandern die Führungselemente 46 in ihren jeweiligen Kulissen 44 in Fahrzeugquerrichtung y nach außen, so dass sich die Seitenwände 28 in Fahrzeugquerrichtung y von der Ladeplattform 28 wegbewegen. Werden die Seitenwände 28 hingegen von ihrer heruntergeklappten Beladungsposition in ihre aufgestellte Ladungssicherungsposition hochgeklappt, so wandern die Führungselemente 42 in ihren jeweiligen Kulissen 44 zwangsgeführt in Fahrzeugquerrichtung y nach innen, so dass sich die Seitenwände 28 in Fahrzeugquerrichtung y auf die Ladeplattform 28 zu bewegen. Mit anderen Worten ist also durch die kulissenartigen Zwangsführungen 38 die Verschwenkbewegung der Seitenwände 28 an eine Bewegung der Seitenwände 28 in Fahrzeugquerrichtung y gekoppelt.

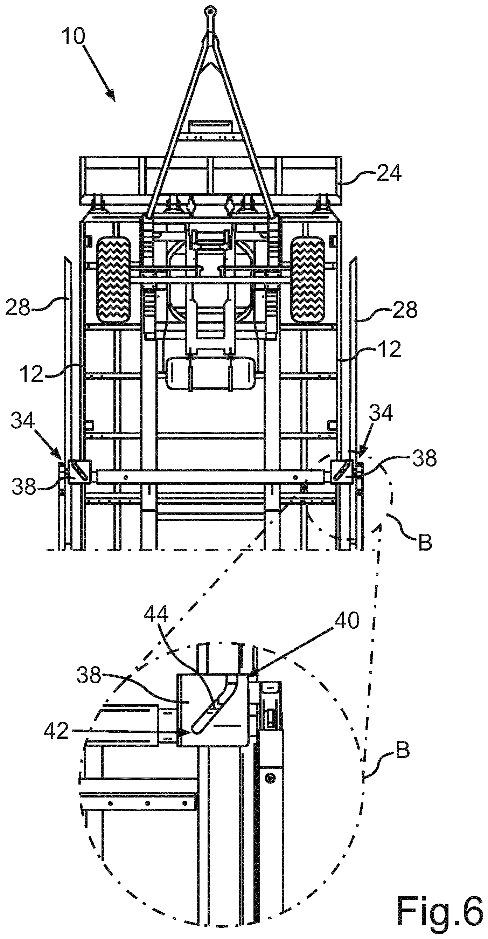

In Fig. 6 ist eine Unterseite des Transportfahrzeugs 10 in einer Draufsicht gezeigt, wobei die beiden Seitenwände 28 in ihrer nach unten geklappten Beladungsposition angeordnet sind. Wie zu erkennen, sind die beiden Seitenwände 28 in der heruntergeklappten Beladungsposition in Fahrzeugquerrichtung y von der Ladeplattform 12 beabstandet. In der vorliegenden Darstellung sind auch noch zwei der Zwangsführungen 38 gut zu erkennen, welche im Bereich der unteren Längsenden 34 angeordnet sind. Jede der Vertikalstreben 32 ist also mittels einer der Zwangsführungen 38 geführt, wodurch die bereits erläuterte Bewegungskopplung erzielt wird. Eine Detailansicht B von einer der Zwangsführungen 38 ist zudem noch in Fig. 6 dargestellt.

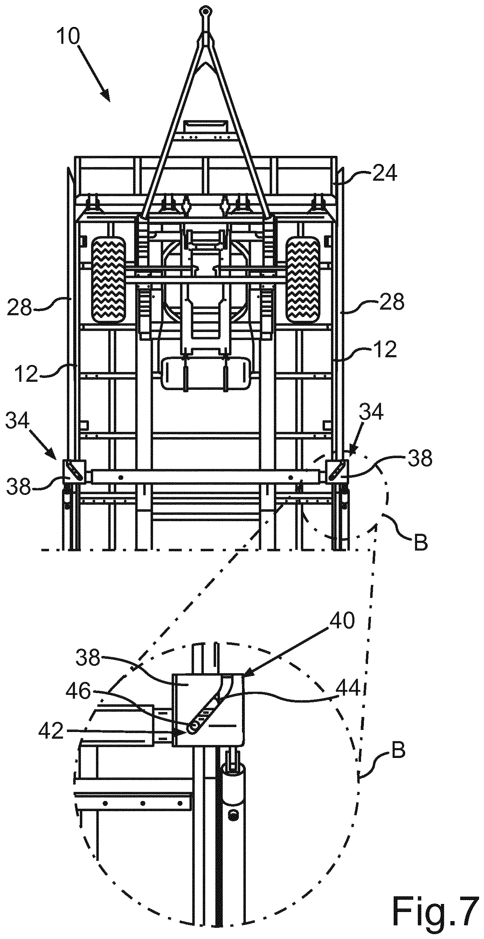

In Fig. 7 ist das Transportfahrzeug 10 erneut in einer Draufsicht von unten gezeigt, wobei die Seitenwände 28 in der vorliegenden Darstellung in ihrer nach oben geschwenkten Ladungssicherungsposition angeordnet sind. Wie der vorliegenden Unteransicht des Transportfahrzeugs 10 gut zu entnehmen, liegen die beiden Seitenwände 28 in ihrer nach oben geschwenkten Ladungssicherungsposition seitlich an der Ladeplattform 12 an. Der Detailausschnitt B ist in Fig. 7 wiederum in einer vergrößerten Darstellung gezeigt. Hier ist gut zu erkennen, dass sich die Führungselemente 46, welche innerhalb der jeweiligen Kulissen 44 zwangsgeführt sind, an dem innenseitigen Endbereich 42 befinden, wenn die Seitenwände 28 in die Ladungssicherungsposition nach oben verschwenkt worden sind. Umgekehrt wandern die jeweiligen Führungselemente 46 in den jeweiligen Kulissen 44 von dem innenseitigen Endbereich 42 bis zum außenseitigen Endbereich 40, wenn die Seitenwände 28 aus ihrer nach oben geklappten Ladungssicherungsposition in die nach unten geklappte Beladungsposition verschwenkt werden.

Neben der Zwangskopplung der Klapp- und Seitwärtsbewegung der Seitenwände 28 kann die besagte Verstelleinrichtung des Transportfahrzeugs 10 alternativ oder zusätzlich auch beispielsweise einen hydraulischen Verstellmechanismus aufweisen, mittels welchem die als Gitterstrukturen ausgebildeten Seitenwände 28 in Fahrzeugquerrichtung y relativ zur Ladeplattform 12 bewegt werden können. Des Weiteren ist es auch möglich, dass die besagte Verstelleinrichtung des Transportfahrzeugs 10 je Seitenwand 28 ein in Fahrzeugquerrichtung y verlaufendes Teleskoprohr aufweist, mittels welchem die jeweiligen Seitenwände 28 in Fahrzeugquerrichtung y relativ zur Ladeplattform 12 bewegbar sind, wobei jeweilige Arretiermittel, beispielsweise in Form von Steckbolzen, vorgesehen sein können, mittels welchen die ausgezogenen Teleskoprohre arretiert werden können.

Der hydraulische Verstellmechanismus, die Teleskoprohre in Kombination mit den Arretiermitteln und die Zwangsführungen 38 können dabei auch beliebig miteinander kombiniert werden. Durch die Verstellbarkeit der Seitenwände 28 in Fahrzeugquerrichtung y relativ zur Ladeplattform 12 kann auf einfache Weise eine Ladungssicherung bewerkstelligt werden. Sobald das Transportfahrzeug 10 mit den Ballen 14, 16 fertig beladen worden ist, werden die Seitenwände 28 nach oben geklappt, wodurch die Ballen 14, 16 zwischen den beiden Seitenwänden 28 eingeklemmt werden. Je nach Abmaßen des Transportfahrzeugs 10 und je nach Abmaßen der aufzuladenden Ballen 14, 16 kann über den besagten hydraulischen Verstellmechanismus und/oder die Teleskoprohre eine zusätzliche Verstellung der Seitenwände 28 in Fahrzeugquerrichtung y erfolgen, um gegebenenfalls die Klemmung der Ballen 14, 16 zwischen den Seitenwänden 28 noch zusätzlich zu erhöhen.

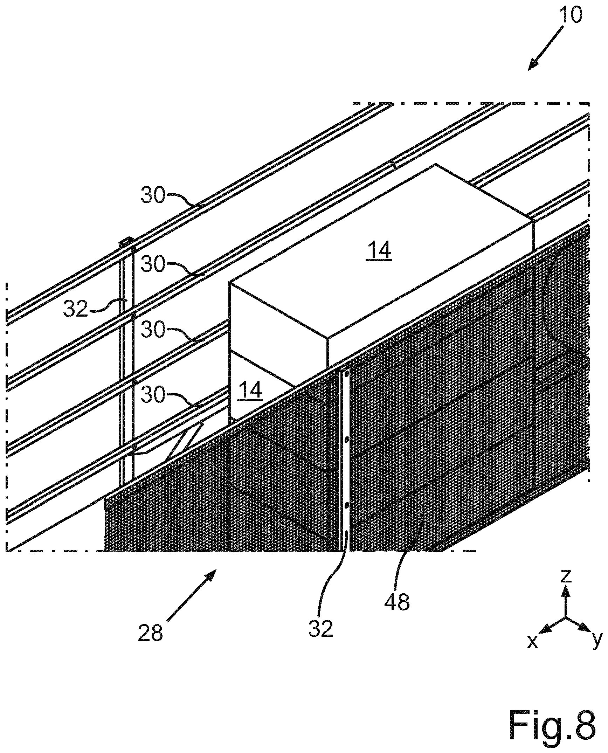

In Fig. 8 ist das Transportfahrzeug 10 in einer perspektivischen Detailansicht gezeigt, wobei an einer der beiden gitterförmig ausgebildeten Seitenwände 28 eine Netzstruktur 48 angebracht ist. Bei der Netzstruktur 48 kann es sich beispielsweise um ein Netz oder auch um eine gitterartig ausgebildete Struktur von mehreren Gurten handeln. Die Netzstruktur 48 ist in Fahrzeugquerrichtung y zwischen den Horizontalstreben 30 und den Vertikalstreben 32 der Seitenwand 28 angeordnet und erstreckt sich vorzugsweise zumindest im Wesentlichen entlang der gesamten Seitenwand 28. Beim Aufklappen der Seitenwand 28 in die aufgestellte Ladungssicherungsposition wird die Netzstruktur 48 aufgespannt, wodurch eine zusätzliche Ladungssicherungsfunktion mittels der Netzstruktur 48 bereitgestellt wird. Beim Herunterklappen der Seitenwand 28 in die abgesenkte Beladungsposition wird die Netzstruktur 48 zusammengefaltet bzw. zusammengelegt, so dass diese beim seitlichen Beladen des Transportsfahrzeugs 10 nicht im Weg ist.

Entgegen der hier gezeigten Ausführungsform des Transportfahrzeugs 10 können auch an beiden Seitenwänden 28 derartige Netzstrukturen 48 angebracht sein, wodurch eine nochmals verbesserte Ladungssicherung erzielt werden kann. Sollten sich beispielsweise einzelne Teile von den Ballen 14, 16 lösen, werden diese durch die Netzstrukturen 28 am Herunterfallen vom Transportfahrzeug gehindert. Ferner kann durch eine beidseitige Anbringung der Netzstrukturen 28 eine noch bessere Klemmung der aufgenommenen Ballen 14, 16 in Fahrzeugquerrichtung y erfolgen, da die Ballen 14, 16 flächig zwischen den an den Seitenwänden 28 angebrachten Netzstrukturen 48 eingeklemmt werden, wenn die Seitenwände 28 in die hochgeklappte Ladungssicherungsposition verschwenkt worden sind.

### BEZUGSZEICHENLISTE:

- 10: Transportfahrzeug
- 12: Ladeplattform
- 14: Ballen
- 16: Ballen
- 18: Fahrgestell
- 20: vorderer Ladeplattformteil
- 22: hinterer Ladeplattformteil
- 24: vordere Stirnwand
- 26: hintere Stirnwand
- 28: Seitenwand
- 30: Horizontalstrebe
- 32: Vertikalstrebe
- 34: unteres Längsende
- 35: Verlängerungsstrebe
- 36: Hubzylinder
- 38: Zwangsführung
- 40: außenseitiger Endbereich
- 42: innenseitiger Endbereich
- 44: Kulisse
- 46: Führungselement
- 48: Netzstruktur
- A: Detailansicht
- B: Detailansicht
- x: Fahrzeuglängsrichtung
- y: Fahrzeugquerrichtung
- z: Fahrzeughochrichtung

## Patentansprüche

1. Transportfahrzeug (10) für Stückgut, insbesondere für Ballen (14, 16), mit einer Ladeplattform (12), an welcher seitlich eine linke Seitenwand (28) und eine rechte Seitenwand (28) angeordnet sind,
**dadurch gekennzeichnet, dass**
zumindest eine der Seitenwände (28) vollständig in Form von einer Gitterstruktur ausgebildet ist, welche mehrere Horizontalstreben (30) aufweist, die gelenkig an wenigstens zwei Vertikalstreben (32) befestigt sind, deren untere Längsenden (34) um jeweilige in Fahrzeugsquerrichtung (y) verlaufende Schwenkachsen verschwenkbar an der Ladeplattform (12) gelagert sind, so dass die Gitterstruktur zwischen einer aufgeklappten Ladungssicherungsposition, in welcher die Vertikalstreben (32) in Hochrichtung (z) des Transportfahrzeugs (10) verlaufen, und einer abgeklappten Beladungsposition, in welcher die Horizontalstreben (30) aneinander anliegen, verschwenkbar ist.

2. Transportfahrzeug (10) nach Anspruch 1,
**dadurch gekennzeichnet, dass**
die oberste der Horizontalstreben (30) in der abgeklappten Beladungsposition in Fahrzeughochrichtung (z) bündig mit einer Ladeplattformoberseite abschließt oder unterhalb von der Ladeplattformoberseite angeordnet ist.

3. Transportfahrzeug (10) nach Anspruch 1 oder 2,
**dadurch gekennzeichnet, dass**
das Transportfahrzeug (10) eine Verstelleinrichtung aufweist, mittels welcher die Gitterstruktur in Fahrzeugquerrichtung (y) relativ zur Ladeplattform (12) bewegbar ist.

4. Transportfahrzeug (10) nach Anspruch 3,
**dadurch gekennzeichnet, dass**
die Verstelleinrichtung eine Zwangsführung (38) aufweist, mittels welcher die Gitterstruktur beim Aufklappen in die Ladungssicherungsposition in Fahrzeugquerrichtung (y) auf die Ladeplattform (12) zu und beim Abklappen in die Beladungsposition von der Ladeplattform (12) weg bewegt wird.

5. Transportfahrzeug (10) nach Anspruch 4,
**dadurch gekennzeichnet, dass**
die Zwangsführung (38) jeweilige sich in Fahrzeugquerrichtung (y) von einem außenseitigen Endbereich (40) zu einem innenseitigen Endbereich (42) erstreckende Kulissen (44) aufweist, mittels welchen jeweilige an den Längsenden (34) der Vertikalstreben (32) angeordnete Führungselemente (46) zwangsgeführt sind, die in der aufgeklappten Ladungssicherungsposition am jeweils innenseitigen Endbereich (42) und in der abgeklappten Beladungsposition am jeweils außenseitigen Endbereich (40) der Kulissen (44) angeordnet sind.

6. Transportfahrzeug (10) nach einem der Ansprüche 3 bis 5,
**dadurch gekennzeichnet, dass**
die Verstelleinrichtung einen hydraulischen Verstellmechanismus aufweist, mittels welchem die Gitterstruktur in Fahrzeugquerrichtung (y) relativ zur Ladeplattform (12) bewegbar ist.

7. Transportfahrzeug (10) nach einem der Ansprüche 3 bis 6,
**dadurch gekennzeichnet, dass**
die Verstelleinrichtung wenigstens ein Teleskoprohr aufweist, mittels welchem die Gitterstruktur in Fahrzeugquerrichtung (y) relativ zur Ladeplattform (12) bewegbar ist, wobei die Verstelleinrichtung zumindest ein Arretiermittel, insbesondere einen Steckbolzen, zum Arretieren des Teleskoprohrs umfasst.

8. Transportfahrzeug (10) nach einem der vorhergehenden Ansprüche,
**dadurch gekennzeichnet, dass**
die Ladeplattform (12) einen auf einem Fahrgestell (18) des Transportfahrzeugs (10) befestigen vorderen Ladeplattformteil (20), an welchem die unteren Längsenden (34) der Vertikalstreben (32) gelagert sind, und einen in Fahrzeuglängsrichtung (x) relativ zum vorderen Ladeplattformteil (20) ausziehbaren hinteren Ladeplattformteil (22) umfasst.

9. Transportfahrzeug (10) nach einem der vorhergehenden Ansprüche,
**dadurch gekennzeichnet, dass**
die Gitterstruktur mehrere Verlängerungsstreben (35) aufweist, welche zur Verlängerung der Gitterstruktur in Fahrzeuglängsrichtung (x) an den Horizontalstreben (30) anordnenbar sind.

10. Transportfahrzeug (10) nach Anspruch 9,
**dadurch gekennzeichnet, dass**
die Verlängerungsstreben (35) relativ zu den Horizontalstreben (30) längsverschiebbar an diesen anordnenbar sind.

## Claims

1. Transport vehicle (10) for general cargo, in particular for bales (14, 16), including a loading platform (12), at which a left sidewall (28) and a right sidewall (28) are laterally arranged,
**characterized in that**
at least one of the sidewalls (28) is completely formed in the form of a grid structure, which comprises multiple horizontal struts (30), which are attached to at least two vertical struts (32) in articulated manner, the lower longitudinal ends (34) of which are supported on the loading platform (12) pivotable around respective pivot axes extending in vehicle transverse direction (y), such that the grid structure is pivotable between a folded-up load securing position, in which the vertical struts (32) extend in vertical direction (z) of the transport vehicle (10), and a folded-down loading position, in which the horizontal struts (30) abut on each other.

2. Transport vehicle (10) according to claim 1,
**characterized in that**
in the folded-down loading position, the uppermost of the horizontal struts (30) is flush with a loading platform topside or is arranged below the loading platform topside in vehicle vertical direction (z).

3. Transport vehicle (10) according to claim 1 or 2,
**characterized in that**
the transport vehicle (10) comprises an adjusting device, by means of which the grid structure is movable relative to the loading platform (12) in vehicle transverse direction (y).

4. Transport vehicle (10) according to claim 3,
**characterized in that**
the adjusting device comprises a compulsory guide (38), by means of which the grid structure is moved towards the loading platform (12) upon folding up into the load securing position in vehicle transverse direction (y) and away from the loading platform (12) upon folding down into the loading position.

5. Transport vehicle (10) according to claim 4,
**characterized in that**
the compulsory guide (38) comprises respective links (44) extending from an exterior end area (40) to an interior end area (42) in vehicle transverse direction (y), by means of which respective guiding elements (46) arranged at the longitudinal ends (34) of the vertical struts (32) are compulsorily guided, which are arranged at the respectively interior end area (42) in the folded-up load securing position and at the respectively exterior end area (40) of the links (44) in the folded-down loading position.

6. Transport vehicle (10) according to any one of claims 3 to 5,
**characterized in that**
the adjusting device comprises a hydraulic adjusting mechanism, by means of which the grid structure is movable relative to the loading platform (12) in vehicle transverse direction (y).

7. Transport vehicle (10) according to any one of claims 3 to 6,
**characterized in that**
the adjusting device comprises at least one telescopic tube, by means of which the grid structure is movable relative to the loading platform (12) in vehicle transverse direction (y), wherein the adjusting device includes at least one locking means, in particular a plug bolt, for locking the telescopic tube.

8. Transport vehicle (10) according to any one of the preceding claims,
**characterized in that**
the loading platform (12) includes a front loading platform part (20) attached on a chassis (18) of the transport vehicle (10), on which the lower longitudinal ends (34) of the vertical struts (32) are supported, and a rear loading platform part (22) extensible relative to the front loading platform part (20) in vehicle longitudinal direction (x).

9. Transport vehicle (10) according to any one of the preceding claims,
**characterized in that**
the grid structure comprises multiple extension struts (35), which can be arranged at the horizontal struts (30) for extending the grid structure in vehicle longitudinal direction (x).

10. Transport vehicle (10) according to claim 9,
**characterized in that**
the extension struts (35) can be arranged at the horizontal struts (30) longitudinally displaceable relative to them.

## Revendications

1. Véhicule de transport (10) pour marchandises diverses, en particulier pour des ballots (14, 16), avec une plate-forme de chargement (12), sur laquelle sont agencées latéralement une paroi latérale gauche (28) et une paroi latérale droite (28),
**caractérisé en ce**
**qu'**au moins l'une des parois latérales (28) est constituée intégralement sous forme d'une structure de grille, laquelle présente plusieurs barres horizontales (30), qui sont fixées, articulées, à au moins deux barres verticales (32), dont les extrémités longitudinales inférieures (34) sont logées de façon pivotante sur la plate-forme de chargement (12), autour d'axes de pivotement respectifs, évoluant dans le sens transversal (y) du véhicule, de sorte que la structure de grille peut pivoter entre une position déployée d'arrimage du chargement, dans laquelle les barres verticales (32) évoluent dans le sens ascendant (z) du véhicule de transport (10), et une position rabattue de chargement, dans laquelle les barres horizontales (30) sont en contact entre elles.

2. Véhicule de transport (10) selon la revendication 1,
**caractérisé en ce que**
la plus haute des barres horizontales (30) se termine, dans la position rabattue de chargement, dans le sens ascendant (z) du véhicule, de niveau avec une partie supérieure de la plate-forme de chargement ou est agencée au-dessous de la face supérieure de la plate-forme de chargement.

3. Véhicule de transport (10) selon la revendication 1 ou 2,
**caractérisé en ce que**
le véhicule de transport (10) présente un dispositif de déplacement, au moyen duquel la structure de grille peut être déplacée, dans le sens transversal (y) du véhicule, par rapport à la plate-forme de chargement (12).

4. Véhicule de transport (10) selon la revendication 3,
**caractérisé en ce que**
le dispositif de déplacement présente un guidage forcé (38), au moyen duquel la structure de grille est déplacée, lors du déploiement dans la position d'arrimage du chargement, dans le sens transversal (y) du véhicule, vers la plate-forme de chargement (12) et, lors du rabattement dans la position de chargement, s'éloigne de la plate-forme de chargement (12).

5. Véhicule de transport (10) selon la revendication 4,
**caractérisé en ce que**
le guidage forcé (38) présente des coulisseaux (44) respectifs, s'étendant, dans le sens transversal (y) du véhicule, depuis une zone d'extrémité, côté extérieur (40), vers une zone d'extrémité, côté intérieur (42), au moyen desquels sont guidés en force des éléments de guidage (46) respectifs, agencés sur les extrémités longitudinales (34) des barres verticales (32), éléments de guidage (46) qui sont agencés, dans la position d'arrimage de chargement déployée, respectivement, sur la zone d'extrémité, côté intérieur, (42) et, dans la position de chargement rabattue, respectivement, sur la zone d'extrémité, côté extérieur, (40) des coulisseaux (44).

6. Véhicule de transport (10) selon l'une des revendications 3 à 5,
**caractérisé en ce que**
le dispositif de déplacement présente un mécanisme de réglage hydraulique, au moyen duquel la structure de grille peut être déplacée dans le sens transversal (y) du véhicule, par rapport à la plate-forme de chargement (12).

7. Véhicule de transport (10) selon l'une des revendications 3 à 6,
**caractérisé en ce que**
le dispositif de déplacement présente au moins un tube télescopique, au moyen duquel la structure de grille est mobile, dans le sens transversal (y) du véhicule, par rapport à la plate-forme de chargement (12), le dispositif de déplacement comprenant au moins un moyen d'arrêt, en particulier un boulon enfichable, pour arrêter le tube télescopique.

8. Véhicule de transport (10) selon l'une des revendications précédentes,
**caractérisé en ce que**
la plate-forme de chargement (12) comprend une partie avant (20) de la plate-forme de chargement, fixée sur un châssis (18) du véhicule de transport (10), sur laquelle sont logées les extrémités longitudinales inférieures (34) des barres verticales (32), et une partie arrière (22) de la plate-forme de chargement, extensible par rapport à la partie avant (20) de la plate-forme de chargement, dans le sens longitudinal (x) du véhicule.

9. Véhicule de transport (10) selon l'une des revendications précédentes,
**caractérisé en ce que**
la structure de grille présente plusieurs barres de prolongement (35), lesquelles peuvent être agencées sur les barres horizontales (30), pour prolonger la structure de grille dans le sens longitudinal (x) du véhicule.

10. Véhicule de transport (10) selon la revendication 9,
**caractérisé en ce que**
les barres de prolongement (35) peuvent être agencées par rapport aux barres horizontales (30), en étant coulissantes dans le sens longitudinal sur celles-ci.
